# EUROPÄISCHE PATENTANMELDUNG

(11) **EP 4 549 229 A2**
(43) Veröffentlichungstag der Anmeldung: **07.05.2025**
(21) Anmeldenummer: 24201094.0
(22) Anmeldetag: 18.09.2024
(51) Int. Cl.: B60L 53/20, B60L 53/22, H02M 1/00

(54) **TRAKTIONSNETZ FÜR EIN KRAFTFAHRZEUG**

(30) Priorität: 18.09.2023 DE 102023209029
(71) Anmelder: VOLKSWAGEN AG, 38440 Wolfsburg (DE); Dr. Ing. h.c. F. Porsche AG, 71287 Weissach (DE)
(72) Erfinder: Kusch, Rüdiger, 38116 Braunschweig (DE); Daut, Ronny, 99817 Eisenach (DE); Pfizenmaier, Tim, 71229 Leonberg (DE); Henkenius, Carsten, 34431 Marsberg (DE)
(74) Vertreter: Zucker, Volker

(57) **Zusammenfassung**

Die Erfindung betrifft ein Traktionsnetz (1) für ein Kraftfahrzeug, wobei das Traktionsnetz (1) mindestens eine Hochvoltbatterie (2), einen Wechselrichter (6), eine Elektromaschine (7), mindestens einen Zwischenkreiskondensator (C), einen Gleichspannungsladeanschluss (11) und einen Wechselspannungsladeanschluss aufweist, wobei zwischen dem Wechselspannungsladeanschluss und der Hochvoltbatterie (2) ein Gleichrichter (8) und ein DC/DC-Wandler (12) angeordnet sind, wobei der DC/DC-Wandler (12) zusätzlich zwischen der Hochvoltbatterie (2) und dem Wechselrichter (6) angeordnet ist, wobei der DC/DC-Wandler (12) als bidirektionaler DC/DC-Wandler (12) ausgebildet ist, wobei eine Kühlplatte (20) vorgesehen ist, wobei mindestens der Wechselrichter (6), der DC/DC-Wandler (12), der mindestens eine Zwischenkreiskondensator (C) und der Gleichrichter (8) mit seinen zugeordneten Induktivitäten (L) auf der Kühlplatte (20) angeordnet sind.

## Beschreibung

Die Erfindung betrifft ein Traktionsnetz für ein Kraftfahrzeug.

Der typische Aufbau eines Traktionsnetzes besteht aus einer Traktionsbatterie, einem Wechselrichter und einer Elektromaschine. Dabei sind viele verschiedene Topologien bekannt, wie die einzelnen Komponenten eines solchen Traktionsnetzes aufgebaut sind. Zur Reduzierung der Ströme wird versucht, fahrzeugseitig mit möglichst hohen Spannungen zu arbeiten. Beispielsweise sind Traktionsnetze bekannt, bei denen die Nennspannung der Traktionsbatterie 800 V beträgt. Dies führt zu Problemen bei der Spannungsfestigkeit der Halbleiterschalter, sodass für derartige Traktionsnetze 3-Level-Wechselrichter vorgeschlagen worden sind, wie beispielsweise in der DE 10 2016206 945 A1 beschrieben. Ein weiteres Problem stellt die uneinheitliche Ladeinfrastruktur dar, wo einerseits 400 V- als auch 800 V-DC-Ladesäulen vorhanden sind. Je nach verwendeter Topologie kann dabei die maximale Ladeleistung nicht voll ausgeschöpft werden oder aber der Schaltungsaufwand ist sehr hoch.

Weiter besteht häufig der Wunsch, dass auch ein Laden mit Wechselspannung möglich ist. In diesem Fall ist zwischen dem Wechselspannungsladeanschluss und der Hochvoltbatterie ein Gleichrichter angeordnet, der die Wechselspannung in eine Gleichspannung wandelt. Dabei kann zusätzlich ein DC/DC-Wandler vorgesehen sein, der die gleichgerichtete Spannung an das Spannungsniveau der Hochvoltbatterie anpasst.

Aus der DE 10 2019 106 485 A1 ist eine Weissach-Gleichrichteranordnung bekannt, die sich an verschiedene Konfigurationen auf der Wechselspannungsladeseite anpassen lässt.

Aus der DE 10 2019 209 654 A1 ist ein gattungsgemäßes Traktionsnetz bekannt. Ähnliche Traktionsnetze sind aus der DE 10 2015 219 863 A1 sowie der DE 10 2015 207 413 A1 bekannt.

Aus der DE 10 2019 117 345 A1 ist eine Hochvoltbatterie bekannt, die zwei Batterieeinheiten aufweist, wobei durch Schalteinheiten die beiden Batterieeinheiten parallel oder in Reihe geschaltet werden können.

Der Erfindung liegt das technische Problem zugrunde, ein gattungsgemäßes Traktionsnetz kompakt auszugestalten.

Die Lösung des technischen Problems ergibt sich durch dein Traktionsnetz mit den Merkmalen des Anspruchs 1. Weitere vorteilhafte Ausgestaltungen der Erfindung ergeben sich aus den Unteransprüchen.

Das Traktionsnetz für ein Kraftfahrzeug weist mindestens eine Hochvoltbatterie, einen Wechselrichter, eine Elektromaschine, mindestens einen Zwischenkreiskondensator, einen Gleichspannungsladeanschluss und einen Wechselspannungsladeanschluss auf. Dabei sind zwischen dem Wechselspannungsladeanschluss und der Hochvoltbatterie ein Gleichrichter und ein DC/DC-Wandler angeordnet, wobei der DC/DC-Wandler zusätzlich zwischen der Hochvoltbatterie und dem Wechselrichter angeordnet ist, wobei der DC/DC-Wandler als bidirektionaler DC/DC-Wandler ausgebildet ist. Dabei ist eine Kühlplatte vorgesehen, wobei mindestens der Wechselrichter, der DC/DC-Wandler, der mindesten eine Zwischenkreiskondensator und der Gleichrichter mit seinen zugeordneten Induktivitäten auf der Kühlplatte angeordnet sind. Hierdurch wird ein sehr kompaktes Design erreicht, da nur eine zentrale Kühlung benötigt wird. Vorzugsweise sind dabei die Bauelemente sowohl auf der Oberseite als auch auf der Unterseite der Kühlplatte angeordnet. Dies wird ermöglicht, da der eine DC/DC-Wandler eine Doppelfunktion übernimmt, sodass ein separater DC/DC-Wandler eingespart wird. Des Weiteren kann durch den DC/DC-Wandler auch der Zwischenkreiskondensator kleiner dimensioniert werden. Der DC/DC-Wandler ist vorzugsweise als bidirektionaler Hochsetz-Tiefsetzsteller ausgebildet.

In einer Ausführungsform ist die Kühlplatte als flüssigkeitsdurchströmte Kühlplatte ausgebildet, wobei die Flüssigkeit vorzugsweise Wasser ist. Die Kühlplatte besteht vorzugsweise aus Aluminium-Druckguss.

In einer weiteren Ausführungsform weisen der Gleichrichter, der Wechselrichter und der DC/DC-Wandler einen gemeinsamen zentralen Controller auf, was weiter Bauelemente einspart und die Integration auf der einen gemeinsamen Kühlplatte erleichtert.

In einer weiteren Ausführungsform ist der DC/DC-Wandler als dreiphasiger interleaved DC/DC-Wandler ausgebildet, der vorzugsweise asymmetrisch ausgebildet ist, d.h. eine Phase ist für geringere Leistungen dimensioniert. Hierdurch lassen sich die Verluste im niedrigen Leistungsbedarf reduzieren, da dann dort nur mit der schwächeren Phase gearbeitet wird, bei der die Verluste geringer sind. Hierdurch wird auch weniger Kühlleistung benötigt.

In einer weiteren Ausführungsform ist der Gleichrichter als unidirektionaler Vienna-Gleichrichter oder als bidirektionaler Neutral-point-clamped-Gleichrichter oder als Weissach-Gleichrichter ausgebildet. Der Vorteil eines unidirektionalen Vienna-Gleichrichters ist, dass dieser sehr robust ist und wenig Bauteile benötigt und einfach skalierbar ist. Dies vereinfacht die Integration auf der einen Kühlplatte. Der bidirektionale Gleichrichter erlaubt hingegen eine Rückspeisung in das externe Netz, wohingegen der Weissach-Gleichrichter eine einfache Anpassung an verschiedene externe Wechselspannungsladestrukturen erlaubt.

In einer weiteren Ausführungsform weist der DC/DC-Wandler ein Schaltmodul auf, das derart ausgebildet ist, dass in einer ersten Schaltstellung der DC/DC-Wandler mit den Eingangsanschlüssen des Wechselrichters verbunden ist und in einer zweiten Schaltstellung mit den Ausgangsanschlüssen des Gleichrichters verbunden ist. Somit ist auch sichergestellt, dass beim Laden der Hochvoltbatterie die Elektromaschine nicht bestromt wird und so kein unerwünschtes Antriebsmoment erzeugt werden kann.

In einer weiteren Ausführungsform weist die Hochvoltbatterie zwei Batterieeinheiten mit gleicher Nennspannung sowie ein Schaltmodul auf, wobei das Schaltmodul derart ausgebildet ist, dass wahlweise die beiden Batterieeinheiten parallel oder in Reihe geschaltet werden können. Beispielsweise beträgt die Nennspannung 400 V, sodass die Hochvoltbatterie mit 400 V oder 800 V für den Antrieb zur Verfügung stehen, sodass die benötigten Ströme reduziert sind. Durch entsprechende Verschaltung kann dabei sichergestellt werden, dass die beiden Batterieeinheiten vor dem Parallelschalten spannungstechnisch angeglichen werden, um Ausgleichsströme zu reduzieren.

In einer weiteren Ausführungsform ist dem DC/DC-Wandler und dem Wechselrichter ein gemeinsamer Entstörfilter zugeordnet, was weiter Bauteile einspart.

In einer weiteren Ausführungsform sind Schaltelemente des Schaltmoduls des DC/DC-Wandlers als Relais ausgebildet und/oder Schaltelemente des Schaltmoduls der Hochvoltbatterie als Relais ausgebildet, sodass jeweils eine galvanische Trennung erreicht werden kann.

Die Erfindung wird nachfolgend anhand bevorzugter Ausführungsbeispiele näher erläutert. Die Figuren zeigen:
- Fig. 1: eine schematische Darstellung eines Traktionsnetzes,
- Fig. 2: eine schematische Darstellung eines Traktionsnetzes mit einem dreiphasigen interleaved DC/DC-Wandler in einer ersten Ausführungsform,
- Fig. 3: einer schematische Darstellung eines Traktionsnetzes mit einem dreiphasigen interleaved DC/DC-Wandler in einer zweiten Ausführungsform,
- Fig. 4: eine perspektivische Darstellung auf eine Kühlplatte und
- Fig. 5: eine perspektivische Darstellung auf die Kühlplatte mit einer weiteren Leiterplatte.

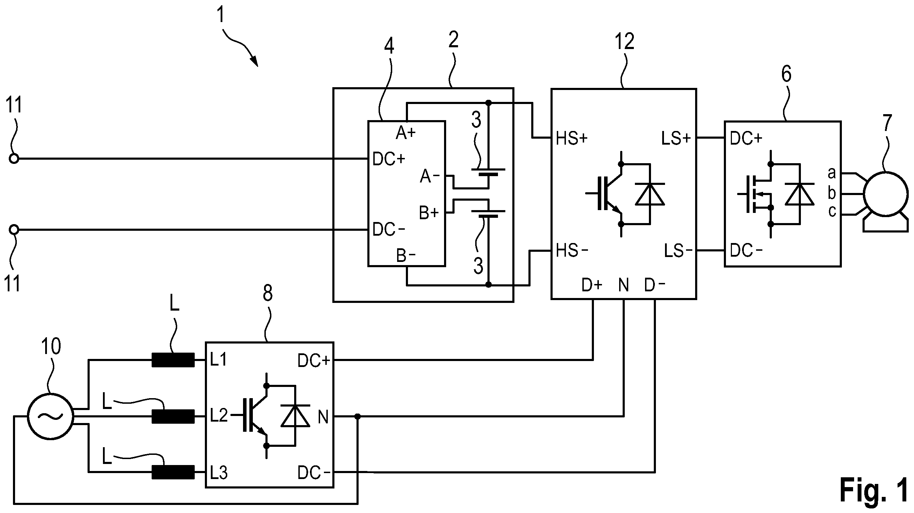

In der Fig. 1 ist schematisch der Grundaufbau eines Traktionsnetzes 1 dargestellt. Das Traktionsnetz 1 weist eine Hochvoltbatterie 2 auf, die zwei Batterieeinheiten 3 und ein Schaltmodul 4 aufweist. Weiter weist das Traktionsnetz einen DC/DC-Wandler 12, einen Wechselrichter 6, eine Elektromaschine 7 und einen Gleichrichter 8 auf. Der Gleichrichter 8 weist drei Eingänge L1-L3 auf, an denen jeweils eine Induktivität L angeordnet ist, deren andere Enden einen Wechselspannungsanschluss für eine externe Wechselspannungsquelle 10 bilden, wobei ein Neutralleiter der Wechselspannungsquelle 10 an eine Verbindung zwischen den Neutralpunkten des Gleichrichters 8 und des DC/DC-Wandlers 12 geführt ist. Der DC/DC-Wandler 12 ist vorzugsweise ein bidirektionaler Hochsetz-Tiefsetzsteller, der die gleichgerichtete Spannung am Ausgang des Gleichrichters 8 auf die Spannung der Hochvoltbatterie 2 hochsetzt. Weiter weist das Traktionsnetz 1 Gleichspannungsanschlüsse 11 auf, die mit dem Schaltmodul 4 der Hochvoltbatterie 2 verbunden sind. Mittels des Schaltmoduls 4 lassen sich die beide Batterieeinheiten 3 wahlweise parallel oder in Reihe schalten. Des Weiteren kann das Schaltmodul 4 Mittel aufweisen, um Spannungsunterschiede zwischen den Batterieeinheiten 3 auszugleichen. Weisen die Batterieeinheiten 3 beispielsweise eine Nennspannung von 400 V auf, so kann an den Gleichspannungsladeanschlüssen 11 wahlweise mit 400 V oder 800 V geladen werden. Durch die Mittel zum Ausgleich der Spannungsunterschiede werden Ausgleichsströme beim Parallelschalten reduziert. Dieser Spannungsausgleich kann auf verschiedene Arten erfolgen, beispielsweise mittels Zellenbalancing. Mittels des DC/DC-Wandlers 12 lässt sich unabhängig von der Spannung der Hochvoltbatterie 2 ein gewünschter Arbeitspunkt an der Elektromaschine 7 mittels des Wechselrichters 6 einstellen, wobei durch die bidirektionale Ausbildung Rekuperationsenergie in die Hochvoltbatterie 2 zurückgespeist werden kann.

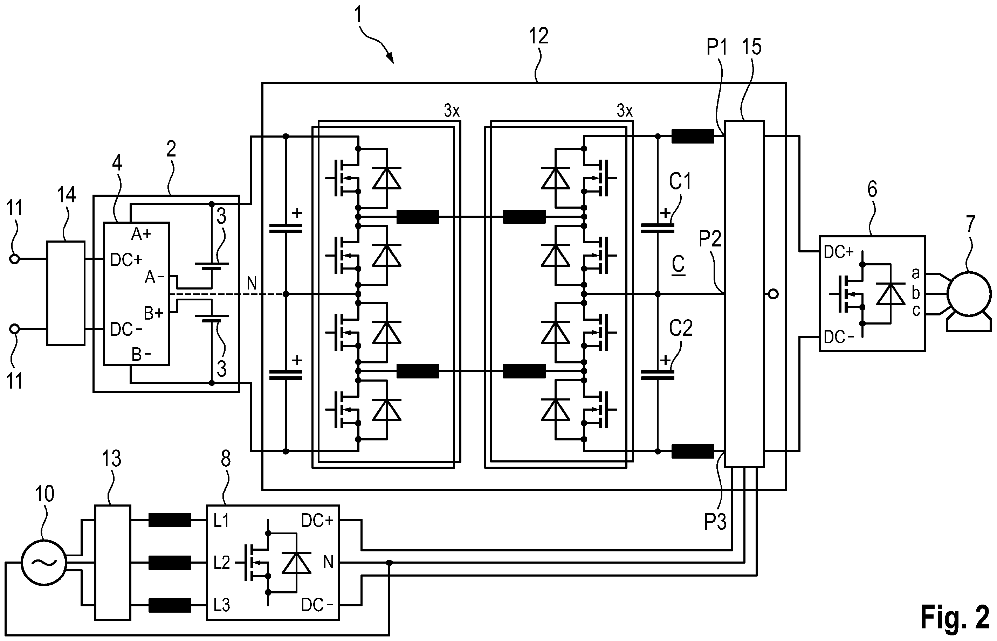

In der Fig. 2 ist nun ein Traktionsnetz 1 gemäß Fig. 1 dargestellt, wobei zusätzlich ein Wechselspannungsfilter 13 und ein Gleichspannungsfilter 14 dargestellt sind. Weiter ist eine mögliche Verschaltung für den DC/DC-Wandler 12 dargestellt, mit der der DC/DC-Wandler 12 sowohl als Hochsetz- als auch als Tiefsetzsteller betrieben werden kann. Dabei ist weiter angedeutet, dass die dargestellte Verschaltung insgesamt dreimal parallel vorhanden ist, um die Leistung aufzuteilen. Dabei können die drei Phasen zeitlich versetzt angesteuert werden. Dies stellt einen dreiphasigen interleaved DC/DC-Wandler 12 dar, wobei der dreiphasige interleaved DC/DC-Wandler 12 vorzugsweise asymmetrisch ist, d.h. eine Phase ist für geringere Ströme bzw. Leistungen ausgelegt. Weiter ist angedeutet, dass ein Neutralpunkt der Hochvoltbatterie 2 mit einem Neutralpunkt des DC/DC-Wandlers 12 verbunden ist. Weiter ist ein Schaltmodul 15 im DC/DC-Wandler 12 dargestellt. In dem Schaltmodul 15 sind Schaltelemente angeordnet, die vorzugsweise als Relais ausgebildet sind. Mittels der Schaltelemente kann beim Laden mit Wechselspannung der Wechselrichter 6 vom DC/DC-Wandler 12 getrennt werden, sodass die Ausgänge DC+, N und DC- des Gleichrichters 8 mit den Punkten P1-P3 des DC/DC-Wandlers 12 verbunden werden. Der Zwischenkreiskondensator C wird dabei durch zwei Kondensatoren C1 und C2 gebildet, die hier als Bestandteil des DC/DC-Wandlers 12 dargestellt sind. Die Halbbrücken des DC/DC-Wandlers 12 sind hier gestackert, sodass die Transistoren nicht für so hohe Sperrspannungen ausgelegt sein müssen. Allerdings werden so vier Transistoren je Halbbrücke benötigt sowie 2 Induktivitäten. Dies erschwert die Integration auf einer Kühlplatte.

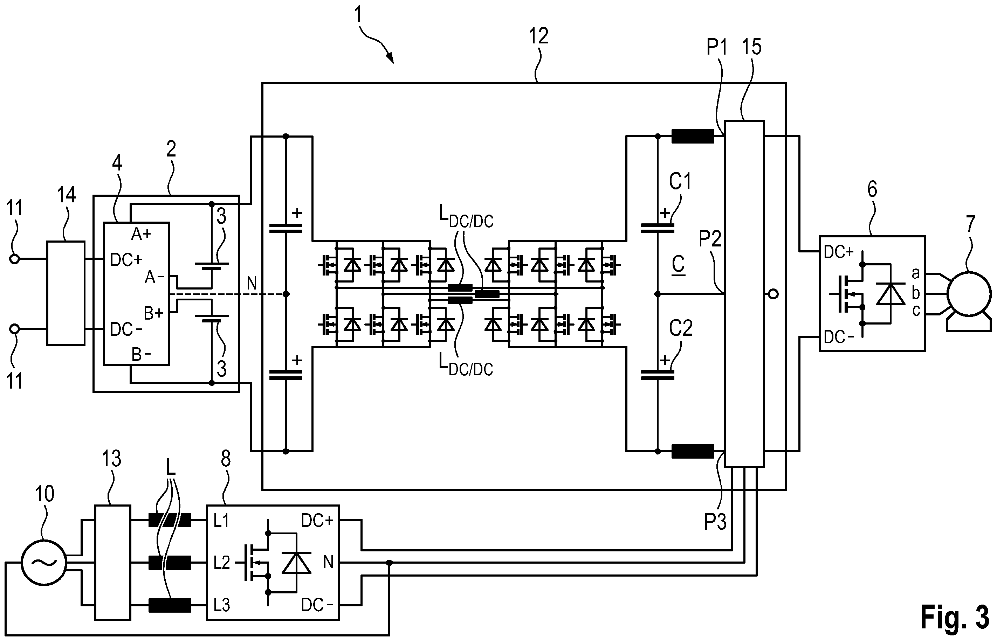

In der Fig. 3 ist eine alternative Bauform für den DC/DC-Wandler 12 gezeigt, mit jeweils nur zwei Transistoren je Halbbrücke, wobei jeweils zwei Halbbrücken an ihren Mittelabgriffen über eine Induktivität L_{DC/DC} miteinander verbunden sind. Dabei ist beispielsweise die obere Phase für geringe Leistungen dimensioniert, die dann alleine im unteren Leistungsbereich der Elektromaschine 7 verwendet wird. Entsprechend können dann auch die Transistoren der beiden Halbbrücken dieser Phase sowie die Induktivität L_{DC/DC} dieser Phase geringer ausgelegt werden. Auch dies stellt wieder einen asymmetrischen dreiphasigen interleaved DC/DC-Wandler 12 dar. Dabei sei angemerkt, dass anstelle der geteilten Kondensatoren (z.B. C1, C2) auch jeweils ein einziger Kondensator verwendet werden kann.

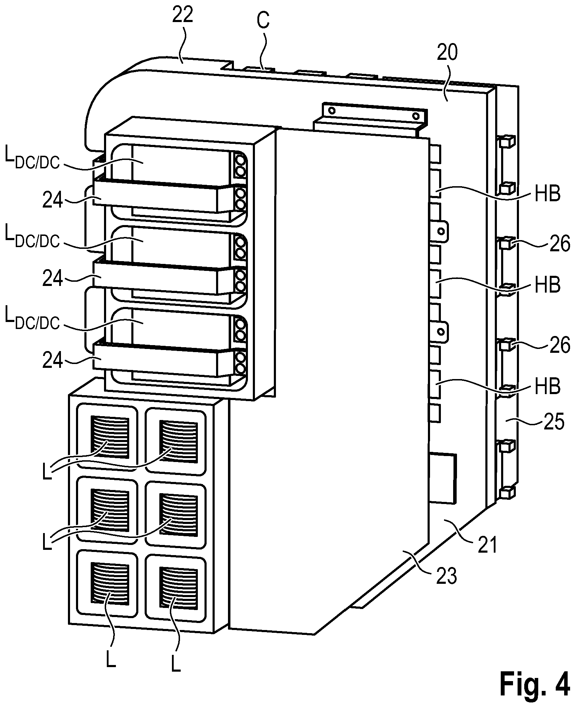

In der Fig. 4 ist eine perspektivische Darstellung gezeigt, wie alle nennenswert Verlustwärme erzeugende Bauelemente auf einer gemeinsamen Kühlplatte 20 angeordnet sind. Auf der Unterseite 21 der Kühlplatte 20 ist eine Steuerplatine 23 für den Gleichrichter 8 und den DC/DC-Wandler 12 angeordnet. Weiter sind die Induktivitäten L des Gleichrichters 8 aufgebracht, wobei jeweils zwei in Reihe geschaltet sind, sodass hier sechs Induktivitäten L dargestellt sind (statt 3 wie in Fig. 3). Des Weiteren sind die Induktivitäten L_{DC/DC} des DC/DC-Wandlers 12 auf der Unterseite 21 der Kühlplatte 20 angeordnet sowie drei Halbbrücken HB, wobei die anderen drei Halbbrücken auf der Oberseite 22 der Kühlplatte 20 angeordnet sind, wobei die elektrische Verbindung zwischen Induktivitäten L_{DC/DC} und den drei Halbbrücken auf der Oberseite 22 durch Stromschienen 24 erfolgt. Dabei kann die oberste Stromschiene 24 auch etwas schmaler ausgebildet sein im Vergleich zu den beiden anderen Stromschienen 24, da diese der Phase für geringere Leistungen zugeordnet ist. Auf der Oberseite 22 der Kühlplatte 20 ist dann noch der Zwischenkreiskondensator C und eine Steuerplatine 25 mit dem Gate-Treiber für den Wechselrichter 6 sowie die Leistungsmodule 26 für den Wechselrichter 6 angeordnet. Somit ist eine einzige Kühlplatte 20 ausreichend, die vorzugsweise flüssigkeitsdurchströmt ist, um alle nennenswert Verlustwärme erzeugende Bauelemente zu kühlen, sodass ein sehr kompakter Aufbau möglich ist.

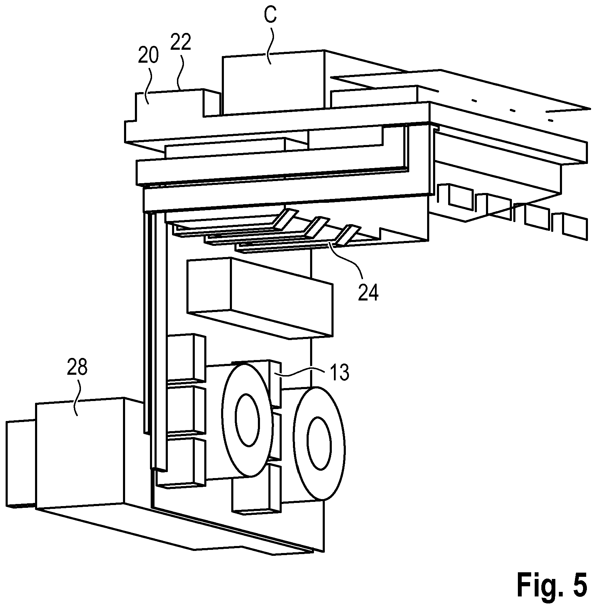

In der Fig. 5 ist perspektivisch dargestellt, wie die Kühlplatte 20 bzw. die auf ihr angeordneten Bauelemente mit einer weiteren Leiterplatte 27 verbunden sind, auf der die Wechselspannungsfilter 13 des Gleichrichters 8 und ein gemeinsamer Entstörfilter 28 für den DC/DC-Wandler 12 und den Wechselrichter 6 angeordnet sind.

### Bezugszeichenliste

- 1: Traktionsnetz
- 2: Hochvoltbatterie
- 3: Batterieeinheit
- 4: Schaltmodul
- 6: Wechselrichter
- 7: Elektromaschine
- 8: Gleichrichter
- 10: Wechselspannungsquelle
- 11: Gleichspannungsladeanschluss
- 12: DC/DC-Wandler
- 13: Wechselspannungsfilter
- 20: Kühlplatte
- 21: Unterseite
- 22: Oberseite
- 23: Steuerplatine
- 24: Stromschiene
- 25: Steuerplatine
- 26: Leistungsmodul
- 27: Leiterplatte
- 28: Entstörfilter
- L_{DC/DC}: Induktivitäten des DC/DC-Wandlers
- L: Induktivitäten des Gleichrichters
- C: Zwischenkreiskondensator
- N: Neutralpunkt

## Patentansprüche

1. Traktionsnetz (1) für ein Kraftfahrzeug, wobei das Traktionsnetz (1) mindestens eine Hochvoltbatterie (2), einen Wechselrichter (6), eine Elektromaschine (7), mindestens einen Zwischenkreiskondensator (C), einen Gleichspannungsladeanschluss (11) und einen Wechselspannungsladeanschluss aufweist, wobei zwischen dem Wechselspannungsladeanschluss und der Hochvoltbatterie (2) ein Gleichrichter (8) und ein DC/DC-Wandler (12) angeordnet sind, wobei der DC/DC-Wandler (12) zusätzlich zwischen der Hochvoltbatterie (2) und dem Wechselrichter (6) angeordnet ist, wobei der DC/DC-Wandler (12) als bidirektionaler DC/DC-Wandler (12) ausgebildet ist, **dadurch gekennzeichnet, dass**
eine Kühlplatte (20) vorgesehen ist, wobei mindestens der Wechselrichter (6), der DC/DC-Wandler (12), der mindestens eine Zwischenkreiskondensator (C) und der Gleichrichter (8) mit seinen zugeordneten Induktivitäten (L) auf der Kühlplatte (20) angeordnet sind.

2. Traktionsnetz nach Anspruch 1, **dadurch gekennzeichnet, dass** die Kühlplatte (20) als flüssigkeitsdurchströmte Kühlplatte (20) ausgebildet ist.

3. Traktionsnetz nach Anspruch 1 oder 2, **dadurch gekennzeichnet, dass** Gleichrichter (8), Wechselrichter (6) und DC/DC-Wandler (12) einen gemeinsamen zentralen Controller aufweisen.

4. Traktionsnetz nach einem der vorangegangenen Ansprüche, **dadurch gekennzeichnet, dass** der DC/DC-Wandler (12) als dreiphasiger interleaved DC/DC-Wandler (12) ausgebildet ist.

5. Traktionsnetz nach Anspruch 4, **dadurch gekennzeichnet, dass** der DC/DC-Wandler (12) als asymmetrischer dreiphasiger interleaved DC/DC-Wandler (12) ausgebildet ist.

6. Traktionsnetz nach einem der vorangegangenen Ansprüche, **dadurch gekennzeichnet, dass** der Gleichrichter (8) als unidirektionaler Vienna-Gleichrichter oder als bi-direktionaler Neutral-point-clamped-Gleichrichter oder als Weissach-Gleichrichter ausgebildet ist.

7. Traktionsnetz nach einem der vorangegangenen Ansprüche, **dadurch gekennzeichnet, dass** der DC/DC-Wandler (12) ein Schaltmodul (15) aufweist, das derart ausgebildet ist, dass in einer ersten Schaltstellung der DC/DC-Wandler (12) mit den Eingangsanschlüssen des Wechselrichters (6) verbunden ist und in einer weiteren Schaltstellung mit den Ausgangsanschlüssen des Gleichrichters (8) verbunden ist.

8. Traktionsnetz nach einem der vorangegangenen Ansprüche, **dadurch gekennzeichnet, dass** die Hochvoltbatterie (2) zwei Batterieeinheiten (3) mit gleicher Nennspannung sowie ein Schaltmodul (4) aufweist, wobei das Schaltmodul (4) derart ausgebildet ist, dass wahlweise die beiden Batterieeinheiten (3) parallel oder in Reihe geschaltet werden können.

9. Traktionsnetz nach einem der vorangegangenen Ansprüche, **dadurch gekennzeichnet, dass** dem DC/DC-Wandler (12) und dem Wechselrichter (6) ein gemeinsamer Entstörfilter (28) zugeordnet ist.

10. Traktionsnetz nach einem der Ansprüche 7 oder 8, **dadurch gekennzeichnet, dass** Schaltelemente des Schaltmoduls (15) des DC/DC-Wandlers (12) als Relais ausgebildet sind und/oder Schaltelemente des Schaltmoduls (4) der Hochvoltbatterie (2) als Relais ausgebildet sind.
